# EUROPEAN PATENT SPECIFICATION

(11) **EP 1 989 912 B1**
(45) Date of publication and mention of the grant of the patent: **06.01.2016**
(21) Application number: 07751605.2
(22) Date of filing: 22.02.2007
(51) Int. Cl.: H04W 48/10

(54) **MULTI-WIRELESS PROTOCOL ADVERTISING**
MULTIDRAHTLOSE PROTOKOLLWERBUNG
ANNONCE DE PROTOCOLE SANS FIL MULTIPLE

(30) Priority: 28.02.2006 US 364879
(43) Date of publication of application: 12.11.2008
(73) Proprietor: ALCATEL LUCENT, 92100 Boulogne-Billancourt (FR)
(72) Inventor: HERVE, Philippe, NL-1083 CX Amsterdam (NL); SMETS, Robertus, C., NL-1381 XT Weesp (NL)
(74) Representative: Wetzel, Emmanuelle
(86) International application number: PCT/US2007/004856
(87) International publication number: WO 2007/100736

(56) References cited:
- EP-A- 1 370 044
- US-A1- 2004 009 770
- US-A1- 2004 063 426
- "Draft IEEE Standard for Local and metropolitan area networks. Part 16: Air Interface for Fixed Broadband Wireless Access Systems Amendment for Improved Coexistence Mechanisms for License-Exempt Operation" INTERNET CITATION, [Online] 6 February 2006 (2006-02-06), pages 1-100, XP002447609 IEEE P802.16h Retrieved from the Internet: URL:http://ieee802.org/16/le/docs/80216h-0 6_004.zip> [retrieved on 2007-08-22]

## Description

### Field of the Invention

This invention generally relates to communication. More particularly, this invention relates to wireless communications.

### Description of the Related Art

Wireless communication systems are well known. For years, wireless communications have been used for telephone communications where mobile subscribers utilize mobile stations such as cell phones for voice communications. Several standard protocols have been developed for such communications. More recently, various types of data communications have become available in wireless communication networks. There are known protocols for such communications.

With advances in wireless communication technology, there are increasing possibilities for such communications. For example, it is foreseen that a number of access points in a network will simultaneously support multiple wireless technologies, especially for small cells. For example, it may be possible for an access point to support wireless fidelity, UMTS, Bluetooth, Zigbee or simpler radio transmitters for radio frequency IDs. The landscape of such access networks around a user will present an environment that may be described as "liquid bandwidth."

Although there are significant advantages to having such a multiplicity of technologies available, the possibility exists that an individual user's equipment may riot be able to determine where a specific radio protocol is available.

Another foreseen advancement is in the area of ad-hoc networking and context-aware services. With such techniques, mobile stations will be able to establish radio connections with other mobile stations (e.g., not requiring a base station for relaying communications from one mobile station to a wireless communication network then to another mobile station). One challenge that must be met to implement such an arrangement is to enable mobile stations to recognize or discover other mobile stations with which such communications are possible. With traditional thinking, one mobile station must have an active radio protocol that matches with that of another mobile station to support mutual discovery and establishing an appropriate connection.

With either of the possible advancements mentioned above, it has been assumed that mobile stations supporting multiple protocols would have to have them all active at the same time or to go through a process of trying them sequentially. There are several drawbacks with this proposed approach. First, maintaining more than one active protocol drains the battery power of a mobile station in a disadvantageous manner. It is not desired, for example, to utilize battery power for a protocol that must remain active even though it is not being used for communication. Another drawback is that maintaining an active wireless protocol without an application currently using it leads to increased security threats. Lastly, the radio frequency spectrum is unnecessarily being polluted by radio frequency signals of idle protocols.

In most currently available wireless networks, a user must select and setup each wireless protocol that will be used. In order to enable ad-hoc networking, there are a number of attempts toward generalized MAC protocols. This is discussed, for example, in A.D. Myers, V.R. Syrotiuk and G.V. Zaruba, "An Adaptive Generalized Transmission Protocol for Mobile Ad-Hoc Networks," ACM/Kluwer Journal on Mobile Networks and Applications (MONET), vol. 7, 493-502, 2002. Most attempts to try to offer a generic protocol for ad-hoc networks need to be implemented as a unique protocol. This requires a high level of agreement between vendors. It still presents the issue of undesirable power consumption. In multi-protocol environments, connectivity is based on trial and error and there currently is no coordinated way to handle resources.

Previous broadcasting methods were valid only for devices reporting the same protocol used for the broadcasting and the communication. For example, low-frequency RF broadcasting in RDS for car radio information has been used. More recent developments include broadcasting signals that indicate protocols used by a wireless communication device. Examples of this technique are disclosed in the United States Patent Application Publication Nos. 2004/0063426 and 2004/0009770 and the Published European Patent Application EP 1370044.

There is a need for an arrangement to facilitate more efficient access to a desired one of a plurality of available protocols. There is also a need for facilitating communications within ad-hoc networks. This invention provides an arrangement that satisfies such needs.

### SUMMARY OF THE INVENTIONS

A method and a device according to the present invention are respectively set out in independent claims 1 and 11, to which the reader is now referred. Preferred features are laid out in the dependent claims.

An exemplary method of communicating as defined in the appended claims includes using a wirelessly broadcast signal from a device as an indication of a plurality of wireless communication protocols supported by the device.

One example includes broadcasting the signal using a protocol that is different than the plurality of wireless communication protocols indicated by the signal.

In one example, the device comprises at least one of a base station or a mobile station and the method includes broadcasting the signal from the base station or the mobile station for indicating the plurality of wireless communication protocols supported by that device.

In one example, the broadcast signal includes an indicator of additional information regarding the broadcasting device, a user of such a device or a characteristic associated with one or more of the protocols indicated by the signal.

In another example, the method includes receiving the broadcast signal at a second device and determining the plurality of wireless protocols that are available for use by the second device for communicating with the device that broadcast the signal.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 schematically shows selected portions of an example device that is useful with an embodiment of this invention.
Figure 2 schematically shows an example communication arrangement that is useful with an embodiment of this invention.
Figure 3 schematically shows another example communication arrangement.
Figure 4 shows still another example communication arrangement.
Figure 5 shows another example communication arrangement that is useful with an embodiment of this invention.

### DETAILED DESCRIPTION

As demonstrated through the examples that follow, this invention allows for a transmitting device such as a base station or a mobile station to broadcast a signal for a variety of types of receiving stations that indicates a set of capabilities inherent to the transmitting device. At a minimum, a list of communication protocols available at the transmitting device are included in the broadcast signal. An incremental set of capabilities can be built into the signal to meet the needs of a particular situation.

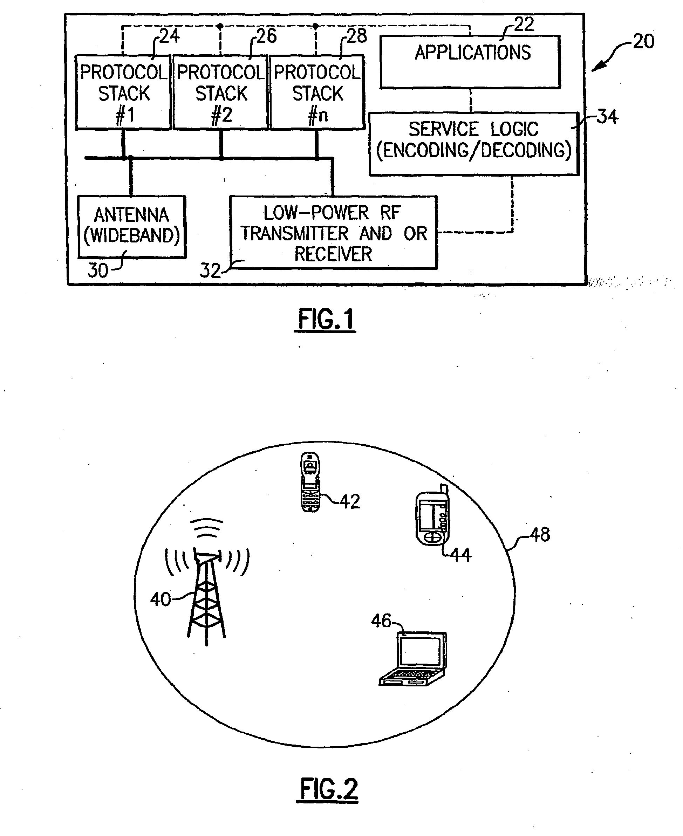

Referring to Figure 1, selected portions of a wireless communication device 20 are schematically shown. In one example, the device 20 comprises a mobile station such as a cell phone, personal digital assistant or a notebook computer. In another example, the device 20 comprises stationary equipment useful with a wireless communication system such as a base station. In this example, the device 20 supports a plurality of applications schematically shown at 22. One or more of the applications can be run using one of a plurality of protocols supported by the device 20. In the illustrated example, protocol stacks 24, 26 and 28 represent the plurality of protocols supported by the device 20.

The device 20 is capable of broadcasting a signal using an antenna 30 and a lower power radio frequency transmitter portion 32. In this example, the device 20 is also capable of receiving such signals and the portion 32 also includes receiver capabilities. When the device 20 is operating in a transmitting mode, a service logic encoding portion 34 encodes information into the broadcast signal to provide at least an indication of the plurality of protocols 24-28 available from the device 20. When the device 20 is operating in a receiving mode, the service logic portion 34 decodes information in a received signal. In one example, the device 20 is considered to be communicating whether it is broadcasting a signal (even if another device does not receive or respond to the broadcast signal), receiving a signal or a combination of these.

In one example, a different protocol is used for broadcasting the signal regarding the other protocols that are available. One example includes a simple radio frequency protocol. Using a protocol that is distinct from the protocols indicated in the broadcast signal for broadcasting the signal can be advantageous in some situations to provide, for example, a uniform protocol that allows various devices to search for available protocols and to reduce power consumption, for example.

There are various scenarios within which a broadcast signal indicating a variety of protocols is useful. Figure 2 schematically illustrates one example where a base station 40 broadcasts a signal regarding the plurality of protocols available for communication with that base station. In this example, a plurality of mobile stations, such as a cell phone 42, a personal digital assistant 44 and a notebook computer 46, receives the broadcast signal from the base station 40. If the user of any one of those devices desires to initiate communication with the base station 40 using at least one of those protocols, appropriate action can be taken to meet the needs of the particular situation using known techniques.

Each of the mobile stations 42-46 is within a broadcast range or coverage area schematically shown at 48. Whenever a device is within the range 48 and the base station 40 is broadcasting the signal, it is possible for a user of the device to initiate communication using one of the indicated protocols. In some examples, once such communication has been initiated, it may continue even though the device moves outside of the coverage area 48 for the broadcast signal, depending on the particular protocol and the communication range of the devices involved. In other words, the broadcast range for the signal advertising or indicating the protocols available for communication with a particular device may have a more limited range than the communication range of that device using one of the available protocols.

One advantage to the arrangement shown in Figure 2 is that the battery lifetime of each of the mobile stations 42-46 can last longer because it need not keep more than one protocol active at any given time. Additionally, security for the mobile stations 42-46 is enhanced because a communication connection with the base station 40, for example, is only established when specifically desired.

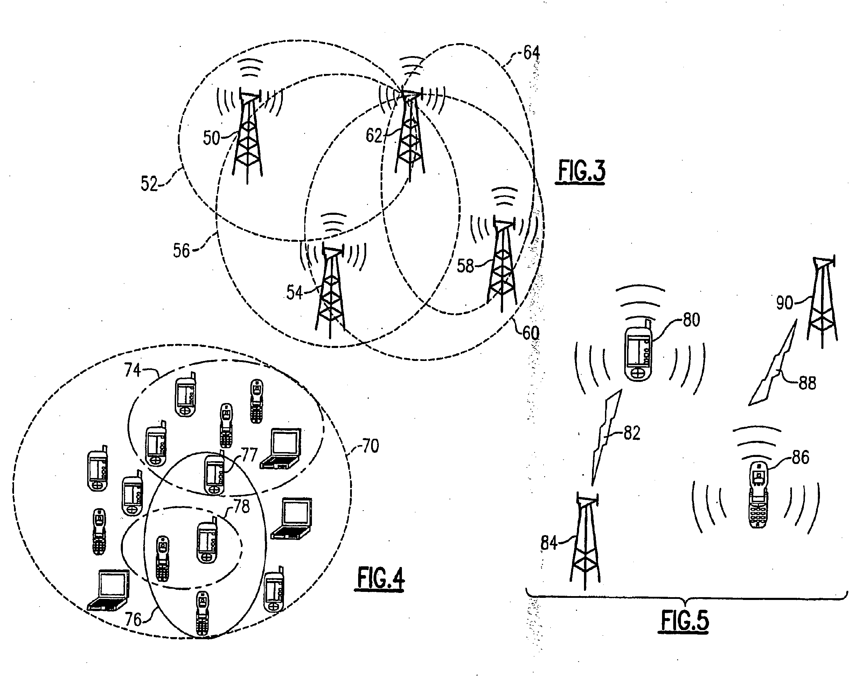

Figure 3 schematically illustrates another arrangement where a broadcast signal designed according to this invention is useful. In Figure 3, a base station 50 broadcasts a signal indicating at least the plurality of protocols available from that base station. A corresponding broadcast area is schematically shown at 52. Similarly, a base station 54 broadcasts such a signal over a range schematically shown at 56, a base station 58 broadcasts such a signal over a range schematically shown at 60 and a base station 62 broadcasts a corresponding signal over a range schematically shown at 64. In one example, each base station 50, 54, 58 and 62 operates in a transmit mode and a receive mode.

In one example, each base station utilizes information from at least one other of the base stations in addition to the list of protocols indicated in the broadcast signal. In one example, the signal broadcast by the base stations includes at least one of quality of service criteria, an indication of a number of maximum users, an indication of frequencies that are available and information regarding channel operation of that base station. In one example, each base station can make a determination regarding the channel configuration of nearby base stations from which the base station receives such a broadcast signal. Each base station can use such received channel configuration information to automatically realign its own transmission channel to avoid interference that might otherwise occur.

Figure 4 schematically illustrates another scenario where broadcast signals indicating a plurality of available protocols are useful. A plurality of mobile stations are within a geographic region schematically shown at 70. For purposes of discussion, each of the mobile stations within Figure 4 is within a range for receiving a broadcast signal from any one of the other mobile stations for determining what protocols are available from each of those mobile stations. In the illustration, a group of mobile stations are designated at 74, each of which is communicating with the others in that group using one of the protocols supported by each of those devices. Another group is schematically shown at 76, which includes four mobile stations in this example. One of the mobile stations shown at 77 is simultaneously using a first protocol for communicating with those in the group 74 and another protocol for those communicating in the group 76. Another group is schematically shown at 78 which includes two mobile stations communicating in another way that is not used by the other members of the group 76.

Each of these communication groups are facilitated or made possible because each of the mobile stations is able to detect the presence of the others and to determine the appropriate protocols that will allow for desired communications among them. Figure 4 schematically shows how a plurality of ad-hoc networks can be established through utilization of a broadcast signal designed according to an embodiment of this invention.

One additional feature of one example broadcast signal useful with an arrangement as shown in Figure 4 includes user information as part of the signal. Mobile stations can exchange information regarding at least one of a MAC address, VLAN tag, IP number, bandwidth information, active protocol information and maximum output power that is allowed or available, for example. Another feature provided in one example is an indication regarding personal information such as gender, a list of known users or "buddies" that are in a close proximity, self-configured preferences or other information. Those skilled in the art who have the benefit of this description will understand and realize how additional information can be incorporated into the broadcast signal providing at least the indication of the plurality of protocols available from a device for better facilitating ad-hoc network establishment, for example. A variety of additional indications regarding a variety of types of data can be incorporated into a broadcast signal to meet the needs of a particular situation.

Another feature that is available in some examples where communications are conducted as schematically shown in Figure 2 or Figure 4, for example, is a location function. In one example, the broadcast signal that indicates a plurality of available protocols also includes an indication of the geographic location of the transmitter (i.e., the device broadcasting the signal), a location area descriptor indicating an area in which the broadcast signal is valid and a time stamp, which may indicate a time when the message was sent or a time period within which the message is valid, for example. When a receiving device receives such a message from multiple transmitters, the receiving device is capable of determining its own location. The indication regarding the location or area in which the message is valid and the determination of its own location allows for a device to determine whether communication on the indicated protocols is currently available with the device from which the message was broadcast. Including such information in a broadcast signal allows for making the advertisement of available resources or protocols time and location dependent. Such limitations may be controlled by service providers or by individual users of the devices providing the broadcast signal, depending on the needs of a particular situation.

Figure 5 schematically shows another communication scenario that includes a broadcast signal designed according to an embodiment of this invention. In this example, a mobile station 80 broadcasts a signal schematically shown at 82, which is received by at least a base station 84. Another mobile station 86 broadcasts a signal 88 that is received by at least a base station 90. The signals from the mobile stations 80 and 86 in one example include at least the indication of the plurality of protocols used by those devices and may include other information as described above.

The base stations 84 and 90 receive such signals and allow a network operator or service provider to adapt the network (or portions of it) to better meet the needs of users within a particular area. For example, if enough mobile stations broadcast a signal indicating that they support a particular protocol, a network provider may use this information to configure or introduce additional base stations to better support more mobile stations using that particular protocol. A network provider can also use personal information included in a broadcast signal to address a group of users that share common properties, for example.

If advertising is available in a particular region and the received broadcast signals from mobile stations in that region indicate a particular demographic, the advertising may be adapted for that group. It is possible for example, for an individual carrying a mobile station that broadcasts a signal designed according to an embodiment of this invention who enters a shopping mall to receive customized information based upon the broadcasted personal information from the mobile station. In this example, the operator of the shopping mall has a receiving device that is capable of receiving such broadcast signals and determining preferences associated with individual mobile stations. The receiving device also responds by communicating appropriate information to those mobile stations for use by their owners.

While several example scenarios in which this invention is useful has been shown, those skilled in the art who have the benefit of this description will realize that other possibilities exist. The disclosed examples demonstrate how this invention provides a solution for efficient mobile station-to-mobile station discovery for establishing ad-hoc networks, for example. Another advantage of the disclosed examples is that they provide for simple quality of service implementation of wireless protocols through resource management. The disclosed examples are adaptable to any new protocol provided that there is sufficient space on the broadcasting channel used for indicating the available protocols.

Other advantages associated with the disclosed examples include no need for replacing any existing wireless protocol. The broadcast signal indicating the plurality of protocols supported by a device can advantageously be of low power and have a low range coverage, which allows a mobile station to continuously discover features of the current radio environment with limited power consumption because doing so is essentially a passive activity that can have a periodicity of several seconds. There is no need for encrypting the broadcast signal because active communication that may pose a security threat, for example, requires an existing, active protocol. No protocol needs to be activated unless the user so desires. Additionally, the disclosed examples allow for enhanced services such as personalized advertisement and management of interference within wireless communication networks.

The preceding description is exemplary rather than limiting in nature. Variations and modifications to the disclosed examples may become apparent to those skilled in the art that do not necessarily depart from the scope of legal protection given to this invention, which can only be determined by studying the following claims.

## Claims

1. A method of communicating, comprising:
using a wirelessly broadcast signal (82, 88) from a device (40-46, 77, 80, 86) as an indication of a plurality of wireless communication protocols (24, 26, 28) supported by the device,
**characterized in that**
a broadcast range for the broadcast signal (82, 88) has a more limited range than a communication range of the device (40-46, 77, 80, 86) using any of the plurality of supported wireless communication protocols (24, 26, 28).

2. The method of claim 1, wherein the wirelessly broadcast signal (82, 88) is broadcast using a protocol that is different than the plurality of wireless communication protocols (24, 26, 28) indicated by the wirelessly broadcast signal.

3. The method of claim 1, wherein the device comprises at least one of a base station (40) or a mobile station (42-46, 77, 80) and comprising
broadcasting the signal from the at least one of the base station or the mobile station for indicating the plurality of wireless communication protocols (24, 26, 28) supported by the device.

4. The method of claim 3, comprising
including at least one indicator of at least one characteristic of the device in the wirelessly broadcast signal, wherein the at least one characteristic comprises at least one of a quality of service criteria for at least one of the wireless communication protocols,
a number of acceptable users of at least one of the wireless communication protocols,
an indication of at least one available frequency associated with at least one of the wireless communication protocols, or
an indication of at least one channel operation characteristic associated with at least one of the wireless communication protocols.

5. The method of claim 3, comprising
including an indication of at least one of an area within which the wirelessly broadcast signal is valid or a time period within which the wirelessly broadcast signal is valid.

6. The method of claim 1, wherein the wirelessly broadcast signal (82, 88) comprises personal information from a user of the device (40-46, 77, 80, 86).

7. The method of claim 1, comprising
broadcasting a wirelessly broadcast signal from each of a plurality of base stations (50, 54, 58, 62) as an indication of a plurality of wireless protocols supported by each base station and as an indication of at least one other characteristic of each base station, respectively; receiving the broadcast signal from at least a first one of the base stations (50, 54, 58, 62) by at least a second, different one of the base stations (50, 54,58,62); and
automatically configuring an operating feature of the second one of the base stations (50, 54, 58, 62) responsive to the indication of the at least one other characteristic of the received broadcast signal.

8. The method of claim 7, comprising
automatically adjusting a transmission channel of at least the second one of the base stations (50, 54, 58, 62) for minimizing interference between the first one of the base stations (50, 54,58,62) and the second one of the base stations (50, 54, 58, 62).

9. The method of claim 1, wherein the device comprises a mobile station (42-46, 77, 80, 86) and the method comprises
receiving the wirelessly broadcast signal at a base station (40, 84, 90) associated with a communication network; and
determining whether to adjust a feature of the communication network responsive to information from the received signal.

10. The method of claim 1, comprising
using at least one mobile station and the wirelessly broadcast signal for locating at least one other mobile station for communicating between the at least one mobile station and the at least one other mobile station as part of an ad hoc network.

11. A device (40-46, 77, 80, 86) for communicating, comprising:
means for wirelessly broadcasting a broadcast signal (82, 88) as an indication of a plurality of wireless communication protocols (24, 26, 28) supported by the device,
**characterized in that**
the means for broadcasting is configured to limit a broadcast range for the broadcast signal (82, 88) to a more limited range than a communication range of the device (40-46, 77, 80, 86) using any of the plurality of supported wireless communication protocols (24, 26, 28).

## Patentansprüche

1. Kommunikationsverfahren, umfassend:
Verwenden eines drahtlosen Broadcast-Signals (82, 88) von einer Vorrichtung (40-46, 77, 80, 86) als Angabe einer Vielzahl von der Vorrichtung unterstützter, drahtloser Kommunikationsprotokolle (24, 26, 28), **dadurch gekennzeichnet, dass** ein Sendebereich für das Broadcast-Signal (82, 88) einen kleineren Bereich als ein Kommunikationsbereich der Vorrichtung (40-46, 77, 80, 86) hat, die ein beliebiges aus der Vielzahl unterstützter, drahtloser Kommunikationsprotokolle (24, 26, 28) verwendet.

2. Verfahren nach Anspruch 1, wobei das drahtlose Broadcast-Signal (82, 88) unter Verwendung eines Protokolls gesendet wird, das sich von der Vielzahl drahtloser Kommunikationsprotokolle (24, 26, 28) unterscheidet, die vom drahtlosen Broadcast-Signal angegeben werden.

3. Verfahren nach Anspruch 1, wobei die Vorrichtung mindestens eines von beiden, eine Basisstation (40) oder eine Mobilstation (42-46, 77, 80) umfasst, weiterhin umfassend:
Senden des Signals von mindestens einer von beiden, der Basisstation oder der Mobilstation, zwecks Anzeigens der Vielzahl drahtloser Kommunikationsprotokolle (24, 26, 28), die von der Vorrichtung unterstützt werden.

4. Verfahren nach Anspruch 3, umfassend:
Aufnahme von mindestens einem Indikator mindestens einer Eigenschaft der Vorrichtung in das drahtlose Broadcast-Signal, wobei die mindestens eine Eigenschaft mindestens eine der folgenden Angaben umfasst, nämlich entweder ein Dienstgütekriterium für mindestens eines der drahtlosen Kommunikationsprotokolle, eine Anzahl zulässiger Benutzer aus mindestens einem der drahtlosen Kommunikationsprotokolle, eine Angabe mindestens einer verfügbaren Frequenz, die mindestens einem der drahtlosen Kommunikationsprotokolle zugeordnet ist, oder
eine Angabe mindestens einer Kanalbetriebseigenschaft, die mindestens einem der drahtlosen Kommunikationsprotokolle zugeordnet ist.

5. Verfahren nach Anspruch 3, umfassend:
die Aufnahme einer Indikation mindestens eines Bereichs, innerhalb dessen das drahtlose Broadcast-Signal gültig ist, oder eines Zeitraums, innerhalb dessen das drahtlose Broadcast-Signal gültig ist.

6. Verfahren nach Anspruch 1, wobei das drahtlose Broadcast-Signal (82, 88) persönliche Informationen zu einem Benutzer der Vorrichtung (40-46, 77, 80, 86) umfasst.

7. Verfahren nach Anspruch 1, umfassend:
Senden eines drahtlosen Broadcast-Signals von einer jeden aus einer Vielzahl von Basisstationen (50, 54, 58, 62) als Angabe einer Vielzahl drahtloser Protokolle, die von einer jeden Basisstation unterstützt werden, beziehungsweise als Angabe mindestens einer weiteren Eigenschaft einer jeden Basisstation; Empfangen des Broadcast-Signals von mindestens einer ersten der Basisstationen (50, 54, 58, 62) durch mindestens eine zweite, nicht zu den Basisstationen (50, 54, 58, 62) gehörende Basisstation; und
das automatische Konfigurieren einer Betriebsfunktion der zweiten der Basisstationen (50, 54, 58, 62) in Reaktion auf die Angabe der mindestens einen weiteren Charakteristik des empfangenen Broadcast-Signals.

8. Verfahren nach Anspruch 7, umfassend:
das automatische Abstimmen eines Übertragungskanals von mindestens der zweiten Basisstation der Basisstationen (50, 54, 58, 62) zwecks Minimierung der Interferenz zwischen der ersten Basisstation der Basisstationen (50, 54, 58, 62) und der zweiten Basisstation der Basisstationen (50, 54, 58, 62).

9. Verfahren nach Anspruch 1, wobei die Vorrichtung eine Mobilstation (42-46, 77, 80, 86) umfasst und das Verfahren Folgendes umfasst:
Empfangen des drahtlosen Broadcast-Signals bei einer dem Kommunikationsnetzwerk zugeordneten Basisstation (40, 84, 90); und
Bestimmen, ob in Reaktion auf die Information des empfangenen Signals eine Funktion des Kommunikationsnetzwerks abzustimmen ist.

10. Verfahren nach Anspruch 1, umfassend:
Verwenden mindestens einer Mobilstation und des drahtlosen Broadcast-Signals zur Positionsbestimmung mindestens einer weiteren Mobilstation zwecks Kommunikation zwischen der mindestens einen Mobilstation und der mindestens einen weiteren Mobilstationen als Bestandteil eines Ad-hoc-Netzwerks.

11. Eine der Kommunikation dienende Vorrichtung (40-46, 77, 80, 86), umfassend:
Mittel für das drahtlose Senden eines Broadcast-Signals (82, 88) als Angabe einer Vielzahl drahtloser, von der Vorrichtung unterstützter Kommunikationsprotokolle (24, 26, 28),
**dadurch gekennzeichnet, dass**
die Mittel für das Senden konfiguriert sind für das Begrenzen eines Sendebereichs für das Broadcast-Signal (82, 88), damit dieses einen kleineren Bereich als ein Kommunikationsbereich der Vorrichtung (40-46, 77, 80, 86) hat, die ein beliebiges aus der Vielzahl unterstützter drahtloser Kommunikationsprotokolle (24, 26, 28) verwendet.

## Revendications

1. Procédé de communication, comprenant l'étape suivante :
utiliser un signal de diffusion sans fil (82, 88) provenant d'un dispositif (40 à 46, 77, 80, 86) comme indication d'une pluralité de protocoles de communication sans fil (24, 26, 28) pris en charge par le dispositif, **caractérisé en ce que**
une plage de diffusion pour le signal de diffusion (82, 88) présente une plage plus limitée qu'une plage de communication du dispositif (40 à 46, 77, 80, 86) en utilisant l'un quelconque parmi la pluralité de protocoles de communication sans fil (24, 26, 28) pris en charge.

2. Procédé selon la revendication 1, dans lequel le signal de diffusion sans fil (82, 88) est diffusé en utilisant un protocole qui est différent de la pluralité de protocoles de communication sans fil (24, 26, 28) indiqués par le signal de diffusion sans fil.

3. Procédé selon la revendication 1, dans lequel le dispositif comprend une station de base (40) et/ou une station mobile (42 à 46, 77, 80) et comprenant la diffusion du signal à partir de la station de base et/ou de la station mobile pour indiquer la pluralité de protocoles de communication sans fil (24, 26, 28) pris en charge par le dispositif.

4. Procédé selon la revendication 3, comprenant l'étape suivante
inclure au moins un indicateur d'au moins une caractéristique du dispositif dans le signal de diffusion sans fil, dans lequel l'au moins une caractéristique comprend une qualité de critères de service pour au moins un des protocoles de communication sans fil, et/ou un nombre d'utilisateurs acceptables d'au moins un des protocoles de communication sans fil, et/ou une indication d'au moins une fréquence disponible associée à au moins un des protocoles de communication sans fil, et/ou une indication d'au moins une caractéristique de fonctionnement du canal associée à au moins un des protocoles de communication sans fil.

5. Procédé selon la revendication 3, comprenant l'étape suivante
inclure une indication d'une zone dans laquelle le signal de diffusion sans fil est valide et/ou une période durant laquelle le signal de diffusion sans fil est valide.

6. Procédé selon la revendication 1, dans lequel le signal de diffusion sans fil (82, 88) comprend des informations personnelles provenant d'un utilisateur du dispositif (40 à 46, 77, 80, 86).

7. Procédé selon la revendication 1, comprenant les étapes suivantes diffuser un signal de diffusion sans fil à partir de chaque station de base parmi une pluralité de stations de base (50, 54, 58, 62) comme indication d'une pluralité de protocoles sans fil pris en charge par chaque station de base et comme indication d'au moins une autre caractéristique de chaque station de base, respectivement ; recevoir le signal de diffusion provenant d'au moins une première station de base parmi les stations de base (50, 54, 58, 62) par au moins une deuxième station de base différente parmi les stations de base (50, 54, 58, 62) ; et
configurer automatiquement un élément de fonctionnement de la deuxième station de base parmi les stations de base (50, 54, 58, 62) en réponse à l'indication de l'au moins une autre caractéristique du signal de diffusion reçu.

8. Procédé selon la revendication 7, comprenant l'étape suivante
ajuster automatiquement un canal de transmission d'au moins la deuxième station de base parmi les stations de base (50, 54, 58, 62) pour réduire au minimum les interférences entre la première station de base parmi les stations de base (50, 54, 58, 62) et la deuxième station de base parmi les stations de base (50, 54, 58, 62).

9. Procédé selon la revendication 1, dans lequel le dispositif comprend une station mobile (42 à 46, 77, 80, 86) et le procédé comprend les étapes suivantes recevoir le signal de diffusion sans fil au niveau d'une station de base (40, 84, 90) associée à un réseau de communication ; et
déterminer s'il faut ajuster ou non une fonction du réseau de communication en réponse aux informations du signal reçu.

10. Procédé selon la revendication 1, comprenant l'étape suivante utiliser au moins une station mobile et le signal de diffusion sans fil pour localiser au moins une autre station mobile pour communiquer entre l'au moins une station mobile et l'au moins une autre station mobile en faisant partie d'un réseau ad hoc.

11. Dispositif (40 à 46, 77, 80, 86) pour communiquer, comprenant :
des moyens de diffusion sans fil d'un signal de diffusion (82, 88) comme indication d'une pluralité de protocoles de communication sans fil (24, 26, 28) pris en charge par le dispositif,
**caractérisé en ce que**
les moyens de diffusion sont configurés pour limiter une plage de diffusion pour le signal de diffusion (82, 88) à une plage plus limitée qu'une plage de communication du dispositif (40 à 46, 77, 80, 86) en utilisant l'un quelconque parmi la pluralité de protocoles de communication sans fil (24, 26, 28) pris en charge.
